# EUROPEAN PATENT SPECIFICATION

(11) **EP 1 662 498 B1**
(45) Date of publication and mention of the grant of the patent: **08.06.2011**
(21) Application number: 05025632.0
(22) Date of filing: 24.11.2005
(51) Int. Cl.: G11B 7/26

(54) **Method and apparatus for manufacturing optical disk**
Verfahren und Vorrichtung zur Herstellung einer optischen Platte
Procédé et appareil de fabrication de disque optique

(30) Priority: 29.11.2004 JP 2004343310
(43) Date of publication of application: 31.05.2006
(73) Proprietor: Tohoku Pioneer Corporation, Tendo-shi, Yamagata 994-8585 (JP)
(72) Inventor: Watanabe, Kenichi, Tendo Yamagata 994-0068 (JP); Ogawa, Yasuo, Tendo Yamagata 994-0068 (JP); Ehara, Kensuke, Tendo Yamagata 994-0068 (JP); Yamanaka, Osamu, Tendo Yamagata 994-0068 (JP); Makita, Shinichi, Tendo Yamagata 994-0068 (JP)
(74) Representative: HOFFMANN EITLE

(56) References cited:
- EP-A- 1 339 054
- WO-A-03/098607
- WO-A-2004/064055
- JP-A- 2 010 539
- JP-A- 6 004 910
- JP-A- 10 074 342
- JP-A- 10 233 042
- JP-A- 11 073 691
- JP-A- 60 182 534

## Description

### BACKGROUND OF THE INVENTION

### Field of the Invention

The present invention relates to a method and an apparatus for manufacturing an optical disk which has an intermediate layer formed by laminating two disk substrates like a DVD (Digital Versatile Disc) for example.

### Description of the Related Art

In recent years, in a data recording field, development concerning optical data recording system (optical disk) is pursued, and utilized in wide fields from industrial goods to consumer goods. The optical data recording system has merits that data can be recorded and reproduced with high recording density in a non-contact state, and the system can use various memories such as a reproducing only memory, write-once memory, rewritable memory and the like, and an inexpensive and large capacity data file can be realized.

For example, WO 03/098607 A2 reflecting the preamble of the independent claims is entitled "Method of manufacturing an optical storage medium and optical storage medium, and JP 11073691 A is entitled "Production of optical disk and optical disk produced by that method".

In the DVD which is used currently, two disk substrates having about 0.6mm thickness are adhered together through an adhesive layer as an intermediate layer. In the case of a dual layer type DVD for example, two disk substrates respectively having optical recording region (also called recording layer, hereinafter) are adhered together through a light-through intermediate layer and as a result, two optical recording regions are opposed to each other through the intermediate layer.

When information is recorded and reproduced with respect to the dual layer type DVD, laser beam is irradiated to each ; of the recording layers from one of the disk substrates such as to come into focus by an optical pickup apparatus.

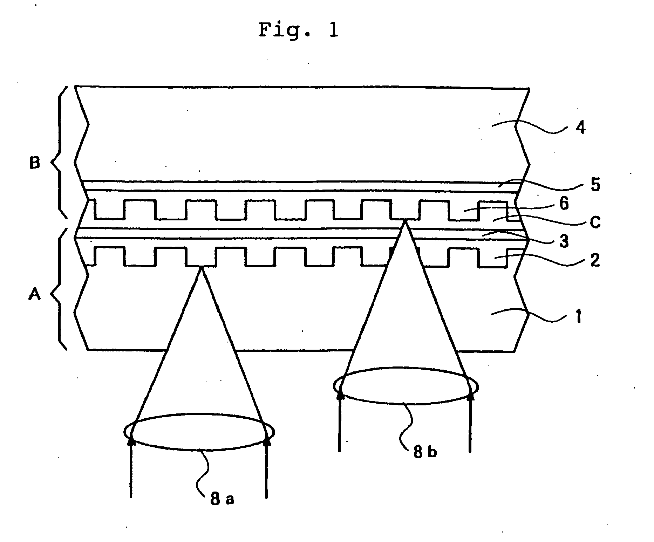

Fig. 1 schematically shows a structure of the dual layer type DVD and a structure of the optical pickup apparatus which is focused on every recording layer. Fig. 1 is an enlarged view of a sectional structure of a portion of a DVD-R (Recordable). One disk substrate (L0 substrate) is formed with a spiral pre-groove (shown with pits and projections in Fig. 1), used by tracking means of the optical pickup apparatus. An organic dye layer 2 is formed on the pre-groove by means such as spin coat method. A semi-transparent layer 3 is further formed on an upper surface of the organic dye layer 2, thereby forming a first substrate A.

The other disk substrate (L1 substrate) 4 is formed with a reflection layer 5, and an organic dye layer 6 is formed on an upper surface of the reflection layer 5. A surface of the organic dye layer 6 is subjected to spiral pre-groove (shown with pits and projections in Fig. 1) used for tracking means of the optical pickup apparatus, thereby forming a second substrate B. The first substrate A and the second substrate B are adhered together by an adhesive C constituting the intermediate layer.

In the optical disk shown in Fig. 1, the organic dye layer 2 on the side of the first substrate A constitutes a first optical recording region (first recording layer), and the organic dye layer 6 on the side of the second substrate B constitutes a second optical recording region (second recording layer). When information is recorded or reproduced with respect to the optical disk having the above structure, laser beam is irradiated to the first recording layer 2 from an optical pickup apparatus 8a disposed in a first position so as to be focused, and laser beam is irradiated to the second recording layer 6 by an optical pickup apparatus 8b disposed in a second position so as to be focused.

In the optical disk having such an adhered structure, control is performed such that the two disk substrates A and B are held such that they are opposed to each other in the adhesion step, an adhesive discharge nozzle is inserted therebetween to discharge adhesive, and each disk substrate is rotated. With this, adhesive discharged from the nozzle is applied in the shape of a ring between the opposed surfaces of the two disk substrates.

After adhesive is applied, the nozzle is retreated from between the disk substrates, and a distance therebetween is narrowed so that adhesive which is applied in the shape of a ring is spread over the entire surface between the disk substrates. A laminating method of the disk substrates having such a step is disclosed in Japanese Patent Application Laid-open No.H10-233042, for example.

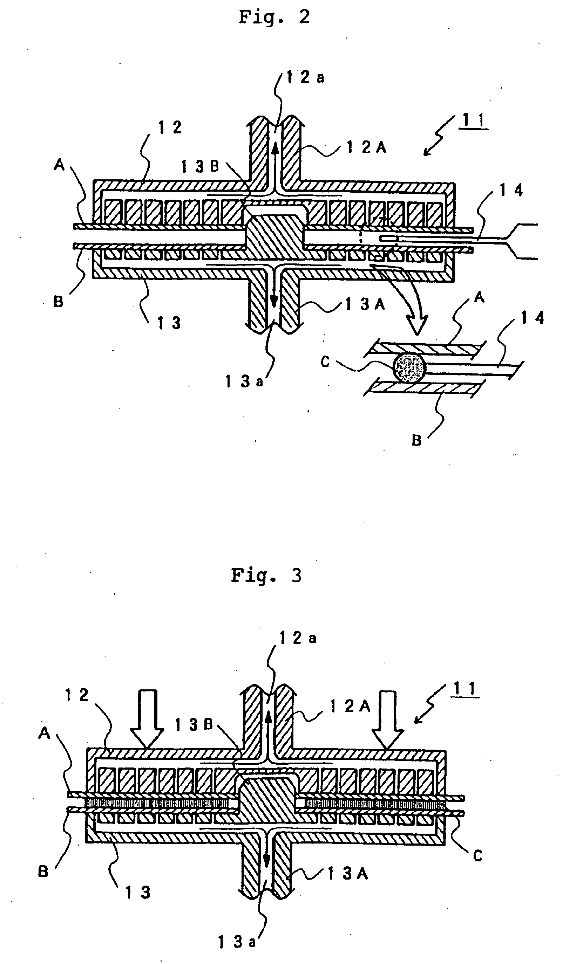

Figs. 2 and 3 schematically show a basic structure of substrate holding means 11 used when an adhesion step of the disk substrates disclosed in Japanese Patent Application Laid-open No. H10-233042 is carried out. To laminate the first and second disk substrates A and B with each other, the disk substrates A and B are held as shown in Figs. 2 and 3, and the substrate holding means 11 which is arranged such that the distance between the held disk substrates can be changed and the disk substrates A and B can rotate is utilized.

Upper and lower suction means 12 and 13 constituting the substrate holding means 11 are formed at their entire surfaces with a large number of sucking holes as shown in Figs. 2 and 3. In the upper suction mean 12, a suction hole 12a which is in communication with the sucking holes is formed in a support shaft 12A which supports the suction mean 12, and the suction hole 12a is in communication with a negative pressure source through an control valve (not shown). In the lower suction mean 13 also, a suction hole 13a which is in communication with the sucking holes is formed in a support shaft 13A which supports the suction mean 13, and the suction hole 13a is in communication with a negative pressure source through an control valve (not shown).

The lower suction mean 13 is provided with a columnar boss 13B projecting toward the upper surface such that the boss 13B is coaxial with the support shaft 13A. The boss 13B functions to inscribe with center holes formed in the first substrate A and the second substrate B and to match the rotation centers of the substrates. The second substrate B is mounted on the lower suction mean 13, and the first substrate A is mounted on the upper suction mean 12, and they are sucked and held by the negative pressure.

In this state, a distance between the disk substrates A and B is narrowed to such a value that the adhesive is charged therebetween. In this case, in the mode shown in Figs. 2 and 3, the upper suction mean 12 is lowered to narrow the distance between the disk substrates A and B, and the adhesive C is discharged from an adhesive discharge nozzle 14 which is inserted therebetween. In this case, a tip end of the nozzle 14 is inserted into a position of about 25mm (R25) from centers of the disk substrates A and B.

A portion of the tip end of the nozzle 14 is shown at a right and lower portion in Fig. 2 in the enlarged scale, the adhesive C is discharged from the nozzle 14 and at the same time, the vertically opposed disk substrates A and B are spun in synchronization with rotation of the suction means 12 and 13. With this, the adhesive C is applied between the disk substrates A and B in the shape of a ring. Then, the nozzle 14 inserted between the disk substrates A and B is retracted and released from between the disk substrates A and B, and as shown in Fig. 3, the upper suction mean 12 further approaches the lower suction mean 13. With this, the adhesive applied between the disk substrates A and B in the shape of a ring is spread between the disk substrates A and B.

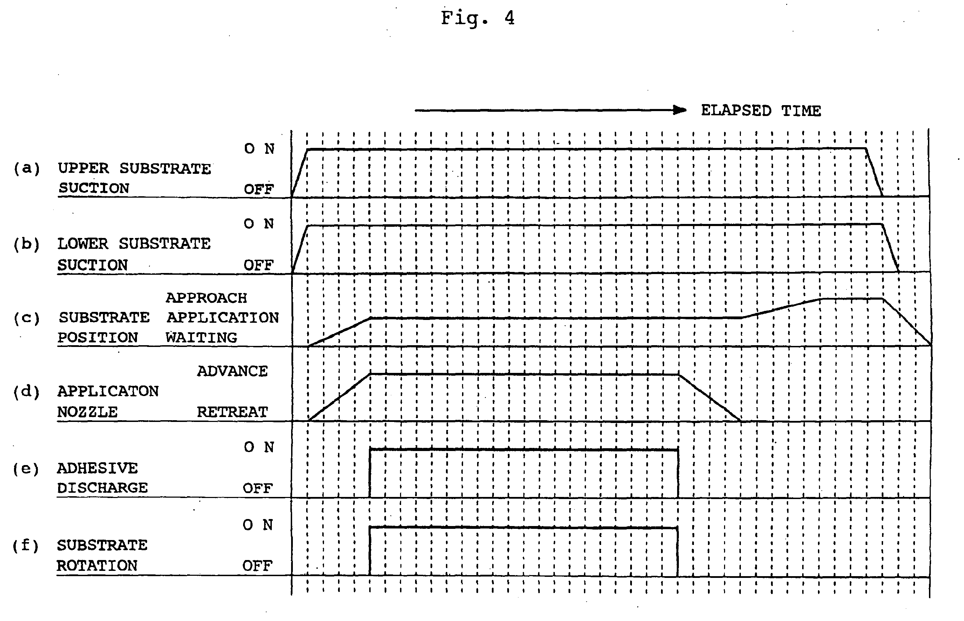

In FIG. 4, each operation in the above adhesion step is shown chronologically. In other words, an operating state of each function is shown in the vertical axis in FIG. 4, and the horizontal axis shows lapsed time. As shown in FIG. 4(a) and (b), firstly an upper substrate (first substrate A) and a lower substrate (second substrate B) are sucked by the suction means 12 and 13. As shown in FIG. 4(c), both the substrates A and B approach a situation where the adhesive can be applied. As shown in FIG. 4(d), simultaneously with this operation, the nozzle 14 moves forward from a retreat position to a position where the adhesive is applied, whereby the tip of the nozzle 14 is inserted in the position located at a distance of 25mm (R25) from the center of each of the disk substrates A and B as described above.

In this state, as shown in FIG. 4(e), the adhesive is discharged from the nozzle 14, and both the substrates A and B are simultaneously rotated as shown in FIG. 4(f), which is carried out by the synchronized rotational movement of the upper and lower suction means 12 and 13 which constitute the substrate holding means 11 as described above. Then, the discharge of the adhesive C from the nozzle 14 is stopped, the nozzle 14 retreats, and the rotation operation of both the substrates A and B are also stopped.

Then, as shown in FIG. 4(c), both the suction means 12 and 13 are brought into close proximity, so that the adhesive applied in the shape of the ring between the disk substrates A and B is spread between both the oppositely facing disk substrates A and B. Subsequently, as shown in (a) and (b), the suction operation of both the upper and lower substrates A and B is stopped. As shown in (c), the sucking board 12 goes up to a waiting position, and the adhesion step is ended.

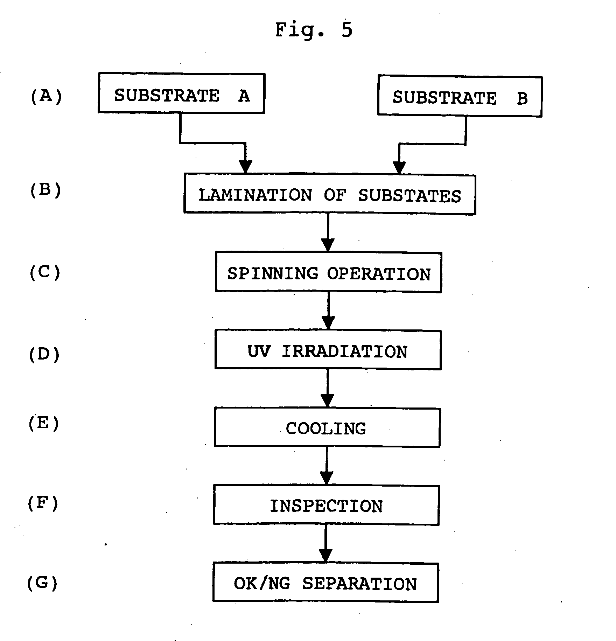

FIG. 5 shows manufacturing process of the optical disk including the adhesion step. That is, as shown in FIG. 5(A), the first substrate A and the second substrate B are supplied to an bonding machine including the substrate holding means 11 shown in FIGS. 2 and 3 by a robot arm (not shown), and the adhesion operation shown in FIG. 5(B) is carried out. The adhesion operation shown in FIG. 5(B) shows the adhesion step described based on FIGS. 2 to 4 carried out by the bonding machine including the substrate holding means 11.

Then, as shown in FIG. 5(C), the superposed substrates A and B are spun. This spinning operation is carried out in a state where the superposed substrates A and B are sucked onto the suction mean 13. With this spinning operation, excessive adhesive C between the substrates A and B is spun off, and the intermediate layer (adhesive layer) between the substrates is smoothened.

As for the adhesive C, a well known ultraviolet curing type resin is used. The adhesive layer formed between both the substrates is irradiated with ultraviolet rays (UV rays) in the following step shown in FIG. 5(D), and is cured, and the intermediate layer is formed. In this case also, this operation is carried out in a state where the superposed substrates A and B are sucked onto the suction mean 13 shown in FIG. 3, and the adhesive C is irradiated with the UV rays through the substrate A.

Then, as shown in FIG. 5(E), the adhered substrates are cooled, whereby the substrate temperature raised by irradiation of ultraviolet rays is radiated. Then, the process moves to an inspection step as shown in FIG. 5 (F), and visual inspection, such as for cracks and warping in the substrate is carried out so that a selection operation is performed in which an O.K. disc (acceptable disc) is separated from an NG disc (defective disc) as shown in FIG. 5(G).

Incidentally, in the smootheningmeans of the intermediate layer for carrying out the spinning operation subsequent to the adhesion step of the substrate, the adhesive between the substrates receives the centrifugal force by the spinning operation and flows toward the outer periphery. In this case, although its degree is varied depending upon the viscosity of the adhesive, there is a tendency that the adhesive layer on the side of the inner periphery of the substrate becomes thinner and the adhesive layer on the side of the outer periphery becomes thicker. In this state, the adhesive is irradiated with UV rays and cured and thus, the thickness of the intermediate layer between the substrates becomes uneven especially in the inner and outer peripheries.

When the thickness of the intermediate layer becomes uneven, optical characteristics as viewed from the irradiation side of laser beam becomes uneven, and this causes a trouble in reading operation of information. That is, in the optical system in the DVD of this kind has shorter wavelength as compared with that of laser beam for the conventional CD, and the numerical aperture (NA) of the optical lens is also high. Therefore, spherical aberration is prone to be generated, and there is a problem that the depth of focus becomes shallower. Thus, it is required to highly equalize the thickness of the intermediate layer.

Hence, to equalize the thickness of the intermediate layer, there is proposedmeans for adhering both the substrates together using a light-through resin sheet having both surfaces applied with adhesive. With this, since evenness of the resin sheet constituting the intermediate layer is relatively high, it becomes easy to manage the thickness of the intermediate layer.

However, since very small optical defects exist in the resin sheet itself in some cases, air (bubbles) are trapped between the substrates and the resin sheet at the time of adhesion, this may generate partial disturbance in the reflected beam, and trouble such as servo disturbance of a disk drive may be generated.

When the resin sheet is used as the intermediate layer, it is necessary to employ a step for cutting and taking out the resin sheet, and a step for peeling a seal-formed sheet off from a base board and using the same, the required equipment is large, and there are generated other problems such as a problem of cycle time, a problem for suppressing burr generated at the time of cutting of the sheet, and a problem which must be overcome in terms of productivity. To solve the problem that the air (bubbles) are trapped between the substrates and the resin sheet, the operation must be carried out in a vacuum, equipment cost is required, and this increases the manufacturing cost.

### SUMMARY OF THE INVENTION

The present invention has been accomplished based on the above-described technical view, and it is an object of the invention to provide a method and an apparatus for manufacturing an optical disk capable of forming intermediate layers into more uniform thickness while using UV curing resin as the intermediate layer.

To solve the above problem, the present invention provides a method of manufacturing an information recording or reproducing optical disk for forming an intermediate layer by aligning rotation centers of two disk substrates formed in the shape of a disk, and curing light curing type adhesive charged between the disk substrates, according to claim 1.

To solve the above problem, the present invention also provides an apparatus for manufacturing an information recording or reproducing optical disk for forming an intermediate layer by aligning rotation centers of two disk substrates formed in the shape of a disk, and curing light curing type adhesive charged between the disk substrates, according to claim 9.

### BRIEF DESCRIPTION OF THE DRAWINGS

FIG. 1 is a schematic diagram showing an example of a structure of a dual layer type DVD and a structure of an optical pickup apparatus which is focused for each of recording layers;
FIG. 2 is a sectional view showing an adhesive being injected between disk substrates in a bonding machine;
FIG. 3 is also a sectional view for explaining an operation after injecting the adhesive;
FIG. 4 is a timing chart for explaining an operation of the bonding machine shown in FIGS. 2 and 3;
FIG. 5 is a flowchart for explaining a manufacturing process of an optical disk including an adhesion step shown in FIG. 4;
FIG. 6 is a sectional view showing a first embodiment for explaining a manufacturing method of the invention;
FIG. 7 is a sectional view showing a second embodiment for explaining a manufacturing method of the invention;
FIG. 8 is a sectional view showing a third embodiment for explaining a manufacturing method of the invention;
FIG. 9 is a schematic diagram for explaining an optical shutter mechanism employed in the structure shown in FIG. 6;
FIG.10 is a schematic diagram for explaining an optical shutter mechanism employed in the structure shown in FIG. 7;
FIG. 11 is a schematic diagram for explaining another optical shutter mechanism employed in the structure shown in FIG. 7;
FIG. 12 is a schematic diagram for explaining an arrangement of UV light-emitting diodes employed in the structure shown in FIG. 8;
FIG. 13 is a timing chart for explaining a first control example performed by the structure shown in FIGS. 6 and 9;
FIG. 14 is a timing chart for explaining a second control example;
FIG. 15 is a timing chart for explaining a third control example;
FIG. 16 is a timing chart for explaining a fourth control example;
FIG. 17 is a timing chart for explaining a fifth control example;
FIG. 18 is a timing chart for explaining a first control example performed by the structure shown in FIGS. 7 and 10;
FIG. 19 is a timing chart for explaining a second control example; and
FIG. 20 is a timing chart for explaining a control example performed by the structure shown in FIGS. 8 and 12.

### DESCRIPTION OF THE PREFERRED EMBODIMENTS

A method and an apparatus for manufacturing an optical disk according to the present invention will be explained based on the illustrated embodiments. The invention which will be explained hereinafter is characterized in spinning operation shown in the already explained FIG. 5 (C) and (D) and the execution process of UV irradiation, and the thickness of the intermediate layer formed by the light curing type adhesive is smoothened.

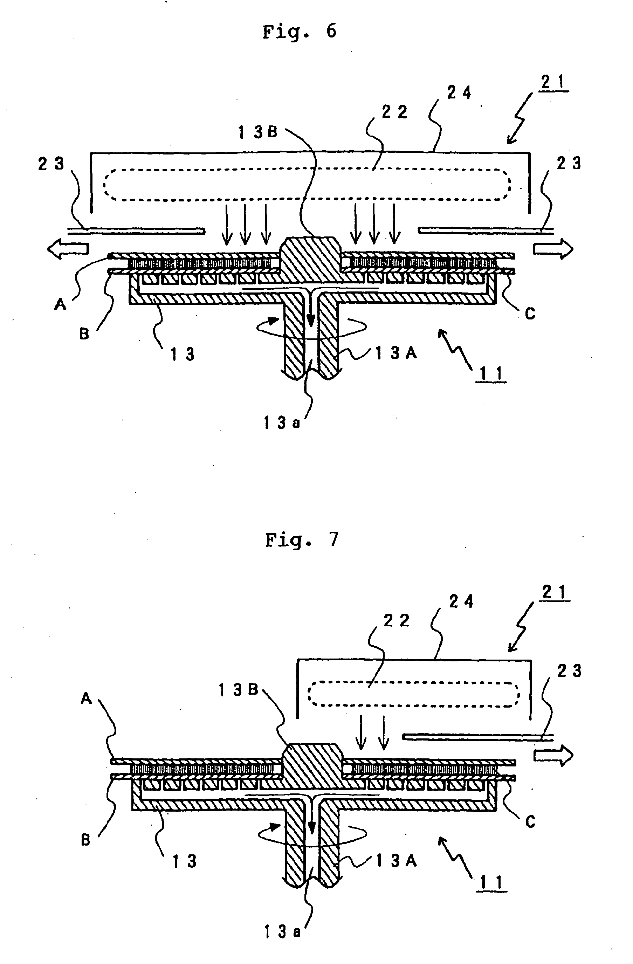

FIG. 6 shows a first embodiment for explaining the spinning operation and the UV irradiation executed after the substrate adhesion step shown in already explained FIG. 5(B). The substrate holding means 11 shown in FIG. 6 is the same as that explained based on FIGS. 2 and 3 and here, only the lower sucking disk 13 is used, and detailed explanation thereof will be omitted.

As explained above, the first substrate A and the second substrate B are superposed on each other through adhesive C discharged therebetween, and they are sucked by the lower sucking disk 13. In this state, a support shaft 13A which supports the suction mean 13 receives spinning action as shown with the arrow by power from a drive source (not shown) and with this, the superposed substrates A and B receives the spinning operation. Light irradiating means 21 is disposed directly above the superposed disk substrates.

The light irradiating means 21 includes a light source 22 for emitting UV rays, and a shutter mechanism 23 which selectively shuts UV rays from the light irradiating means 21. A symbol 24 represents a cover member for covering the side and the entire upper portion of the light source 22. In the embodiment shown in FIG. 6, ametal halide lamp or the like capable of irradiating the entire surface of the substrate A with UV rays is used as the light source 22 for example.

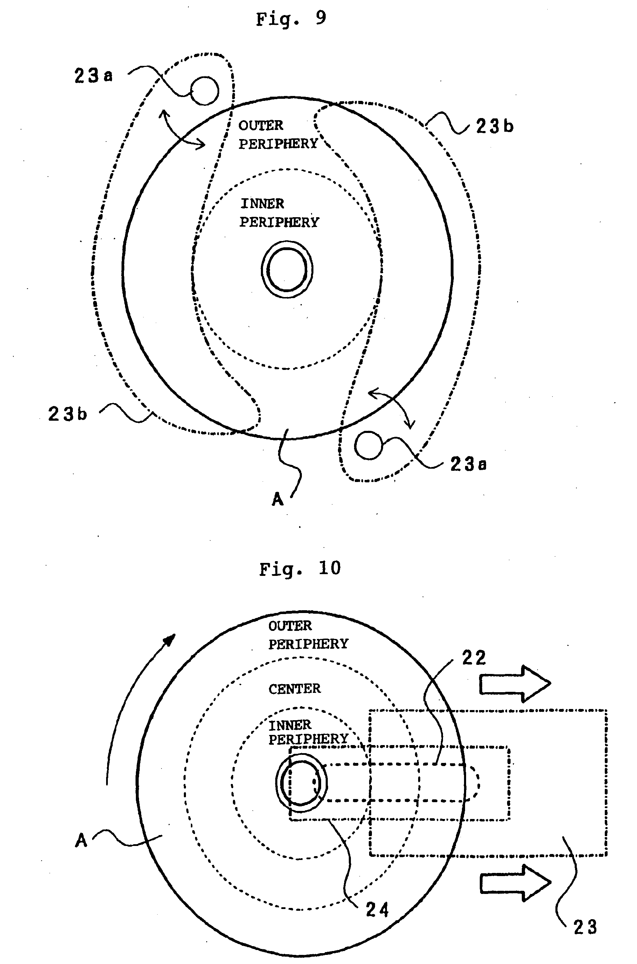

The shutter mechanism 23 is interposed between the light source 22 and the upper substrate A held by the substrate holding means 11. The shutter mechanism 23 shown in FIG. 6 includes a plurality of shutter blades 23b which are turned in the horizontal direction around the support shaft 23a as schematically shown in FIG. 9. Although two shutter blades 23b are shown in FIG. 9 so as to simplify the drawing, six to eight shutter blades 23b are disposed in the circumferential direction at equal distances from one another.

That is, the shutter blades 23b have the same structure (circular shutter) as that of an iris mechanism of a camera lens, the shutter blades 23b are turned in synchronization with the support shaft 23a, regions in the disk substrate A divided concentrically, i.e., in the example shown in FIG. 6, an inner peripheral region, and the inner peripheral region and an outer peripheral region (all regions) of the disk substrate A can be irradiated with UV rays. With this, the adhesive of each region can be irradiated with UV rays through the disk substrate A, and the adhesive can selectively be cured in each region.

FIG. 7 shows a second embodiment of the invention. In FIG. 7, elements having the same functions as those shown in FIG. 6 are designated with the same symbols. In the embodiment shown in FIG. 7, an UV light-emitting lamp having such a size that substantially radius of the substrates A and B are covered is used as the light source 22.

The shutter mechanism 23 shown in FIG. 7 uses a square light shield plate, and this is interposed between the light source 22 and the upper substrate A held by the substrate holding means 11. In the shutter mechanism 23 shown in FIG. 7, an end of the square light shield plate (designated with symbol 23) moves in the horizontal direction toward the radial direction from the center position of the substrate A as schematically shown in FIG. 10.

Therefore, regions of the disk substrate A divided concentrically, i.e., in the example shown in FIG. 10, an inner peripheral region, the inner peripheral region and a central region, the inner peripheral region, the central region and the outer peripheral regions (all regions) can be irradiated with UV rays from the light source 22 toward the disk substrate A in succession. At that time, the disk substrate A receives spin in the direction of the arrow in FIG. 10 by the substrate holding means 11. Thus, the adhesive of each region is irradiated with UV rays through the disk substrate A, and the adhesives can selectively be cured on the base of from region to region.

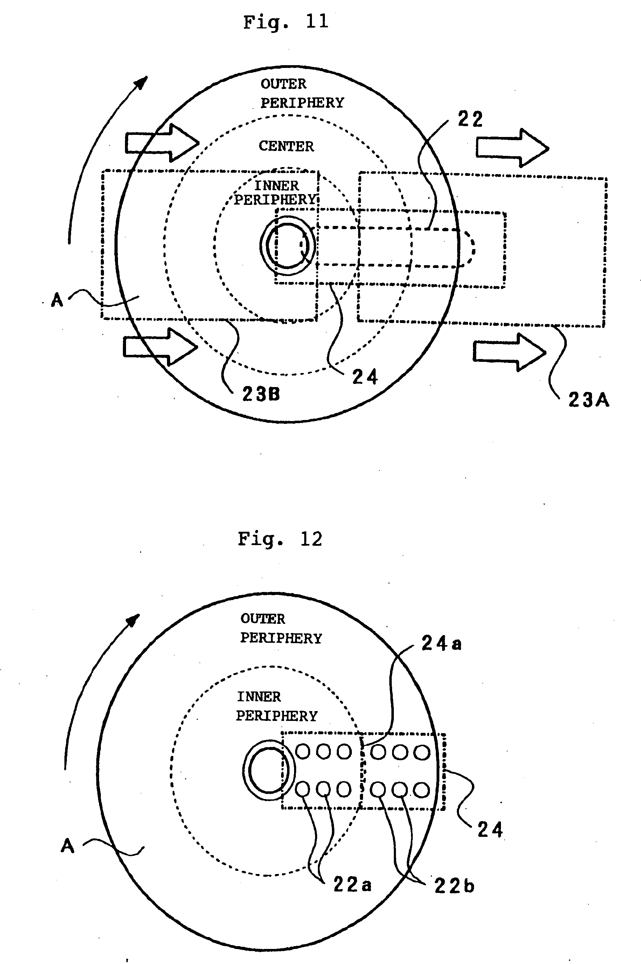

According to the embodiment shown in FIGS. 7 and 10, the one square light shield plate is used as the shutter mechanism 23. Thus, as the light shield plate moves, the inner peripheral region, the inner peripheral region and the central region, the inner peripheral region, the central region and the outer peripheral regions (all regions) of the disk substrate A can be irradiated with UV rays in succession. Hence, as shown in FIG. 11, the apparatus has a first square light shield plate 23A and a second square light shield plate 23B as the shutter mechanism 23, and the first and second light shield plates 23A and 23B move simultaneously at a predetermined distance from each other. With this, the inner peripheral region, the central region and the outer peripheral region of the disk substrate A can be irradiated with UV rays individually.

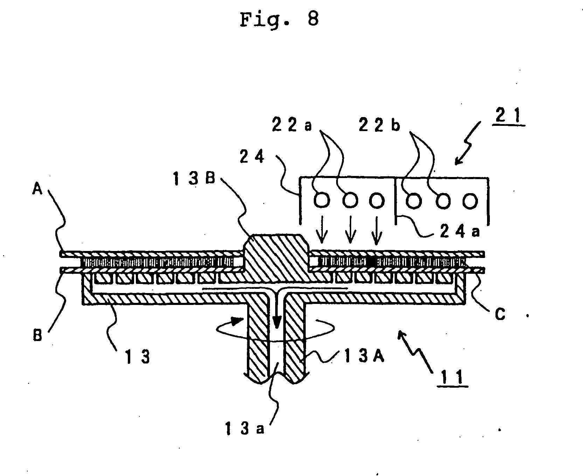

FIG. 8 shows a third embodiment of the invention. In FIG. 8, the elements having the same functions as those shown in FIG. 6 are designated with the same symbols. In the embodiment shown in FIG. 8, there are provided a large number of ultraviolet rays (UV) light-emitting diodes as the light sources, the UV light-emitting diodes are arranged in the shape of a band along the radial direction of the disk substrate A, and they are opposed to the disk substrate A.

A partition plate 24a is disposed at a substantially central portion of the cover member 24 in the longitudinal direction. The cover member 24 covers the UV light-emitting diode. Thus, If a UV light-emitting diode 22a located in the inner peripheral region divided concentrically in the disk substrate A is lit, the disk substrate A can be irradiated with UV rays from the diodes 22a with respect to the inner peripheral region of the disk substrate A.

If a UV light-emitting diode 22b located in the outer peripheral region divided concentrically in the disk substrate A is lit, the disk substrate A can be irradiated with UV rays from the diodes 22b with respect to the outer peripheral region of the disk substrate A.

At that time, the disk substrate A receives spin in the direction of arrow shown in FIG. 12 by the substrate holding means 11. Thus, the adhesive of each region is irradiated with UV rays through the disk substrate A, and the adhesives can selectively be cured on the base of from region to region.

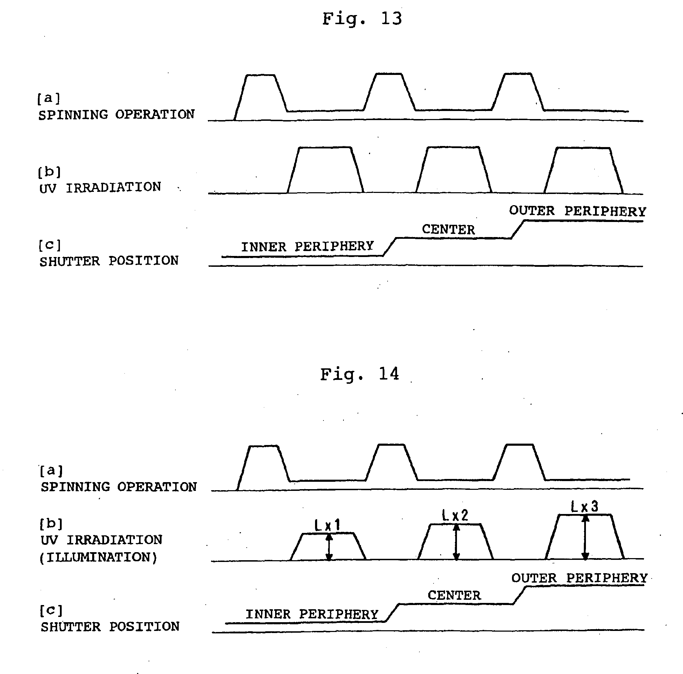

FIGS. 13 to 20 are used for explaining the spinning operation and the irradiation operation of UV rays carried out in each embodiment of the invention. In the spinning operation and the irradiation operation of UV rays, a command for executing the spinning operation with respect to the substrate holding means 11 by control means (not shown), and a command for selectively irradiating each region of the disk substrate with UV rays are output. Thus, the timing charts shown in FIGS. 13 to 20 are used for explaining each control example carried out by the control means.

FIG. 13 is for explaining a first control example carried out by a second embodiment of the invention explained based on FIG. 7 and 10. FIG. 13(a) shows timing for commanding the spinning operation with respect to the substrate holding means 11. Here, it is shown that after three spinning operations and each spinning operation and then, subsequent low speed spinning operation are carried out.

FIG. 13 (b) shows timing for irradiating an upper surface of the first substrate A with UV rays by the UV rays source 22, and FIG. 13 (c) shows an opening state of the light shield plate constituting the shutter mechanism 23 shown in FIGS. 7 and 10. Here, "inner periphery" means the inner peripheral region which is concentrically divided in the disk substrate A as shown in FIG. 10, and the inner peripheral region is irradiated with UV rays.

Further, "central portion" means that the inner peripheral region and the central region which are concentrically divided in the disk substrate A, and these regions are irradiated with UV rays. Further, "outer periphery" means the inner peripheral region, the central region and the outer peripheral region (all regions) divided concentrically in the disk substrate A, and these regions are irradiated with UV rays. In (a) to (c) in FIGS. 14 to 20 also, the same operation as that described below is carried out.

As shown in FIG. 13 (a), the disk substrates A and B receive the spinning operation. With this, the excessive adhesive C between both the substrates is spun off, and the intermediate layer (adhesive layer) between both the substrates can be smoothened. At that time, the adhesive C between both the substrates receives centrifugal force caused by the spinning operation, the adhesive C flows toward the outer periphery, and the adhesive layer in the inner periphery of the substrate becomes thin and the adhesive layer in the outer periphery becomes thick. When the shutter position comes to the "inner periphery", the irradiation of UV rays is carried out.

In this case, in the embodiment shown in FIG. 7, since the UV rays source 22 is disposed in such a state that the UV rays source 22 covers substantially radius of the substrate, the disk substrates A and B receive low speed spinning operation. With this, the adhesive C in the inner peripheral region is irradiated with UV rays uniformly through the disk substrate A, and the adhesive C in the inner peripheral region is cured.

Next, the disk substrates A, B receive the spinning operation again. With this, the adhesive C in the central region to the outer peripheral region between the substrates A and B receives the centrifugal force and flows toward the outer periphery, and a portion of the adhesive C is spun off. Thus, control is performed such that the thickness of the adhesive layer in the central region becomes equal to the thickness of the adhesive layer in the inner peripheral region. In this state, the shutter position comes to the "central portion", and the UV irradiation is carried out. At that time, since the disk substrates A and B receives low speed spinning operation similarly, the adhesives C in the inner peripheral region and central region are irradiated with UV rays equally and with this, the adhesive C in the central region is cured.

Then, the disk substrates A and B receive the spinning operation again. With this, the adhesive C in the outer peripheral region between the substrates A and B receives the centrifugal force and flows toward the outer periphery, and a portion of the adhesive C is spun off. Thus, control is performed such that the thickness of the adhesive layer in the outer peripheral region becomes equal to the thicknesses of the adhesive layers in the inner peripheral region and the central region. In this state, the shutter position comes to the "outer peripheral region", and the UV irradiation is carried out. At that time, since the disk substrates A and B receives low speed spinning operation similarly, the adhesives C in the all regions are irradiated with UV rays equally and with this, the adhesive C in the outer peripheral region is cured.

With this step, both the substrates are adhered together and formed with the intermediate layer and moved to the already explained cooling step shown in FIG. 5 (E) . Then, process moves to the inspection step as shown in FIG. 5(F), and visual inspection, such as for cracks and warping in the substrate is carried out so that a selection operation is performed in which an 0.K. article (non-defective article) is separated from an NG article (defective article) as shown in FIG. 5(G).

As explained based on FIG. 13, both the substrates which are superposed on each other through the adhesive are subjected to the spinning operation each time, and the step for curing the adhesives from the inner peripheral region in succession is carried out. Thus, the thicknesses of the adhesive layers from the inner peripheral region to the outer peripheral region can be adjusted by the spinning operation which is carried out each time. Therefore, by utilizing the above-described effect, it is possible to form an adhesive layer (intermediate layer) having uniform thickness over the entire surface of the substrate.

FIG. 14 is for explaining a second control example carried out in the second embodiment of the invention explained based on FIGS. 7 to 10. In the control example shown in FIG. 14, the level of UV irradiation shown in (b), i.e., illumination of UV rays to be irradiated when curing the adhesives in the inner peripheral region, the central region and the outer peripheral region is increased in succession as shown in Lx1 to Lx3.

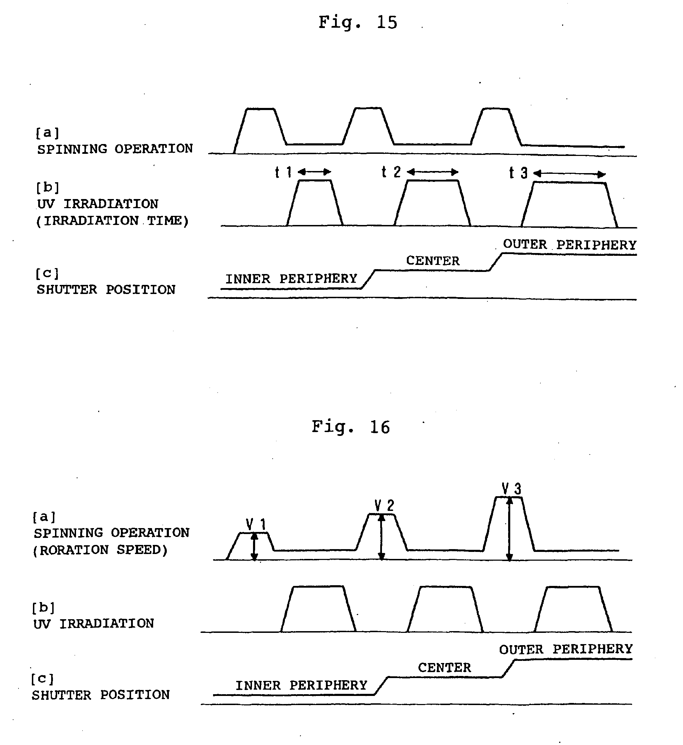

FIG. 15 is for explaining a third control example carried out in the second embodiment of the invention explained based on FIGS. 7 to 10. The control example shown in FIG. 15 is carried out such that the irradiation time of UV rays is varied as shown in (b). That is, control is performed such that the irradiation time of UV rays when curing the adhesives in the inner peripheral region, the central region and the outer peripheral region becomes longer as shown in t1 to t3.

FIG. 16 is for explaining a fourth control example carried out in the second embodiment of the invention explained based on FIGS. 7 to 10. The control example shown in FIG. 16 is carried out such that the rotation speed of the spinning operation is varied as shown in (a). That is, control is performed such that the rotation speed in the respective spinning operations carried out before curing the adhesives in the inner peripheral region, the central region and the outer peripheral region is increased as shown in V1 to V3.

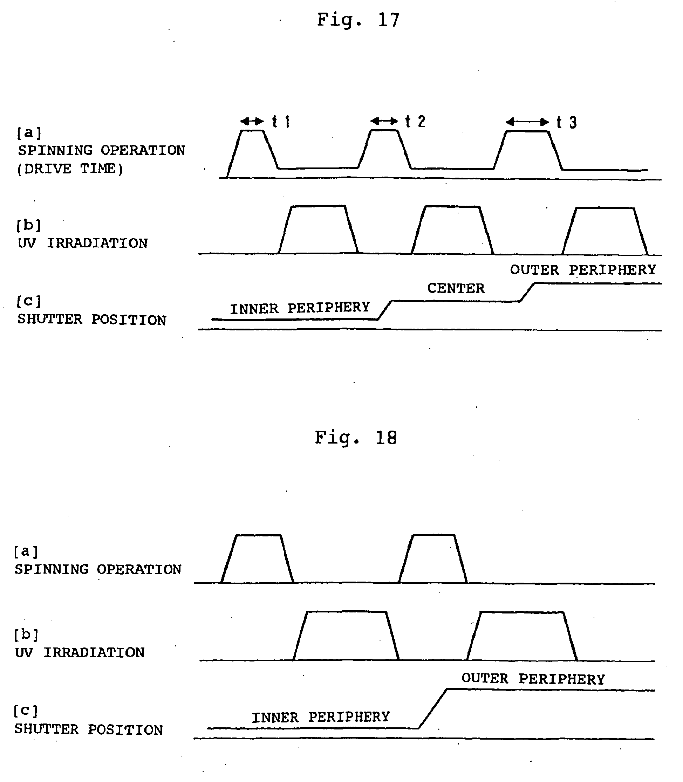

FIG. 17 is for explaining a fifth control example carried out in the second embodiment of the invention explained based on FIGS. 7 to 10. The control example shown in FIG. 17 is carried out such that the duration of the spinning operation is varied as shown in (a). That is, control is performed such that the driving time of the spinning operation carried out before curing the adhesives in the inner peripheral region, the central region and the outer peripheral region is increased as shown in t1 to t3.

In each of the above-explained control examples shown in FIGS. 14 to 17, one parameter is varied, but it is possible to appropriately combine the properties of UV curing adhesive forming the intermediate layer, the setting manner of the irradiation region and other various conditions and to perform control. With this, it is possible to form an adhesive layer (intermediate layer) having uniform thickness over the entire surface of the substrate by the same effect as that explained based on FIG. 13. When each of the controls shown in FIGS. 13 to 17 is to be carried out, it is also possible to employ the shutter mechanism having the first and second light shield plates 23A and 23B as shown in FIG. 11 if necessary.

FIG. 18 is for explaining the first control example carried out by the first embodiment of the invention explained based on FIGS. 6 and 9. In the control example shown in FIG. 18(a) to (c) also, the same control example as those shown in FIGS. 13 to 17 is shown, but in the example shown in FIG. 18, the shutter position is set in the inner periphery and the outer periphery as explained based on FIGS. 6 and 9.

In the embodiment shown in FIG. 6, the structure capable of irradiating the entire surface of the substrate A with UV rays is employed as the light source 22 for emitting UV rays. Therefore, the low speed spinning operation explained above is unnecessary after the spinning operations shown in FIG. 18 (a) . Even if the control example shown in FIG. 18 is employed, it is possible to form an adhesive layer (intermediate layer) having uniform thickness over the entire surface of the substrate by the same effect as that explained above.

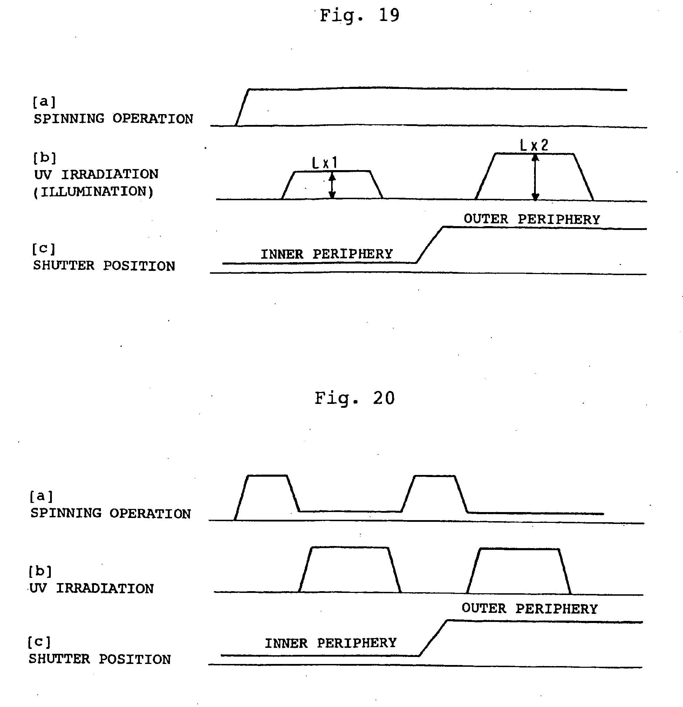

FIG. 19 is for explaining the second control example carried out by the first embodiment of the invention explained based on FIGS. 6 and 9. In the control example shown in FIG. 19, the spinning operation of the substrates A and B are continuously carried out irrespective of the UV rays irradiation timing of the inner periphery and the outer periphery.

In the example shown in FIG. 19, the irradiation level of UV rays shown in Fig. 19(b) is controlled such that the illumination of UV rays for curing the adhesive in the outer periphery is greater than that in the inner periphery. Even if the control example shown in FIG. 19 is employed, it is possible to form an adhesive layer (intermediate layer) having uniform thickness over the entire surface of the substrate by the same effect as that explained above.

FIG. 20 is for explaining the control example carried out by the third embodiment of the invention explained based on FIGS. 8 and 12. In the control example shown in FIG. 20, as explained based on FIGS. 8 and 12, a large number of UV light-emitting diodes are used as the irradiation source of UV rays, and these diodes are arranged in the shape of a band along the radial direction of the disk substrate A.

Therefore, in the control example shown in FIG. 20, this is expressed as "shutter position" as shown in (c), and this expresses the lighting operations of the UV light-emitting diodes 22a and 22b which are opposed to the inner periphery and the outer periphery of the substrate. In the case of this example, since the UV light-emitting diodes are arranged in the shape of a band along the radial direction of the disk substrate A, the disk substrates A and B receive low speed spinning operation at the irradiation timing of UV rays.

The spinning operation is carried out in the same manner as that shown in (a) of each of the above-explained FIGS. 13 to 17. Even if the control example shown in FIG. 20 is employed, it is possible to form an adhesive layer (intermediate layer) having uniform thickness over the entire surface of the substrate by the same effect as that of the control examples explained above.

The above-explained embodiments can preferably be employed when an optical disk comprising two substrates which are adhered together through the light-through intermediate layer like a DVD as explained at the beginning is to be manufactured. However, the method for manufacturing an optical disk according to the present invention can also be preferably used when a cover layer having uniform thickness is to be formed as shown in a method for manufacturing a Bluray disc utilizing blue laser as disclosed in earlier Japanese Laid-open No. 2006-048762 (corresponding to Japanese Patent Application No. 2004-224450) filed by the present assignee.

According to the earlier application, one of substrates is formed with an optical recording region, the other substrate is a light-through dummy substrate, both the substrates are adhered together through adhesive to form an intermediate layer, and the dummy substrate is peeled off from the intermediate layer after the adhesive is cured. The intermediate layer, i.e., the cover layer in the optical recording region formed in this manner can have more uniform thickness, and it is possible to manage the thickness of the cover layer in the blue ray disk which requires high uniformity.

## Claims

1. A method of manufacturing an information recording and/or reproducing optical disk for forming an intermediate layer by aligning rotation centers of two disk substrates (A, B) formed in the shape of a disk, and curing light curing type adhesive (C) charged between the disk substrates (A, B), **characterized in that** the disk substrate (A, B) is divided concentrically into regions, and each of the adhesive (C) in each of the regions is irradiated with light, thereby selectively curing the adhesives (C), said method including
a spin step for rotating the two disk substrates (A, B) which are superposed on each other through the light curing type adhesive, and a step for irradiating the adhesive (C) in a plurality of previously set regions through one of the disk substrates (A) with adhesive curing light to selectively cure the adhesive (C) in each region, **in that** spinning time periods of the disk substrate (A, B) of the spin steps are set different from one another, and **in that** the spin step is carried out prior to said light irradiation step for irradiating the adhesive with said adhesive curing light in each region in said disk substrates (A, B).

2. The method of manufacturing the optical disk as claimed in claim 1, wherein the adhesive (C) in each of the concentrically divided regions of the disk substrate is irradiated by light using a shutter mechanism (23) which shields the adhesive curing type light.

3. The method of manufacturing the optical disk as claimed in claim 1 or claim 2, wherein the light irradiation step is first carried out with respect to the adhesive (C) charged in one of the most inner peripheral region among the plurality of the concentrically divided regions of the disk substrate (A, B).

4. The method of manufacturing the optical disk as claimed in any one of claim 1 through claim 3, wherein the light irradiation step is carried out in succession with respect to the adhesives (C) from the most inner peripheral region toward outer peripheral regions among the plurality of the concentrically divided regions of the disk substrate (A, B).

5. The method of manufacturing the optical disk as claimed in any one of claim 1 through claim 4, wherein illuminations of light to be irradiated to the adhesives (C) in each of the plurality of the concentrically divided regions of the disk substrate (A, B) are set different from one another.

6. The method of manufacturing the optical disk as claimed in any one of claim 1 through claim 5, wherein irradiation time periods of light to be irradiated to the adhesives (C) in each of the plurality of the concentrically divided regions of the disk substrate are set different from one another.

7. The method of manufacturing the optical disk as claimed in any one of claim 1 through claim 6, wherein a ultraviolet curing type resin which is cured upon reception of UV rays is used as the adhesive (C).

8. The method of manufacturing the optical disk as claimed in claim 1, wherein rotation speeds of the disk substrate (A, B) in the spin steps are set different from one another.

9. An apparatus for manufacturing an information recording or reproducing optical disk for forming an intermediate layer by aligning rotation centers of two disk substrates (A, B) formed in the shape of a disk, and curing light curing type adhesive (C) charged between the disk substrates (A, B), the apparatus comprising
substrate holding means (11) for holding the two disk substrates (A, B) superposed on each other through the light curing type adhesive (C) such that the disk substrates (A, B) can rotate,
light irradiating means (21) for selectively irradiating the adhesive (C) corresponding to preset regions of the disk substrate (A, B) with the adhesive curing type light, and
control means for outputting a command for allowing the substrate holding means (11) to execute a spinning operation, and a command for allowing the light irradiating means (21) to selectively irradiate the adhesive (C) corresponding to each of said regions of the disk substrate (A, B) with the adhesive curing type light, **characterized in that** the disk substrate (A, B) is divided concentrically into regions, and each of the adhesive (C) in each of the regions is irradiated with light, thereby selectively curing the adhesives (C), **in that** spinning time periods of the disk substrate (A, B) of the spin steps are set different from one another, and **in that** said execution of the spinning operation of the substrate holding means (11) is conducted prior to the irradiation of the adhesive curing type light to the adhesive (C) in each of the regions in the disk substrate (A, B).

10. The apparatus for manufacturing the optical disk according to claim 9, wherein the light irradiating means (21) includes a light source (22)for emitting the adhesive curing type light, and a shutter mechanism (23) disposed between the light source (22) and the disk substrate (A, B), the shutter mechanism (23) selectively shields light emitted from the light source (22) to the adhesive (C) by a command from the control means.

11. The apparatus for manufacturing the optical disk according to claim 9, wherein the light irradiating means (21) includes a large number of light sources (22) emitting the adhesive curing type light, each of the light sources (22) is selectively lit by a command from the control means so that the adhesive (C) corresponding to a preset region of the disk substrate (A, B) is selectively irradiated with the light.

12. The apparatus for manufacturing the optical disk according to claim 11, wherein the large number of light sources (22) constituting the light irradiating means (21) is UV light-emitting diodes.

## Patentansprüche

1. Verfahren zum Herstellen einer optischen Informations-Aufzeichnungs- und/oder Wiedergabe-Scheibe zum Ausbilden einer Zwischenschicht, indem Drehzentren von zwei in der Form einer Scheibe ausgebildeten Scheibensubstraten (A, B) zur Deckung gebracht werden und ein zwischen den Scheibensubstraten (A, B) eingefülltes, lichthärtendes Haftmittel (C) gehärtet wird, **dadurch gekennzeichnet, dass** das Scheibensubstrat (A, B) konzentrisch in Bereiche geteilt ist und jedes Haftmittel (C) in jedem der Bereiche mit Licht bestrahlt wird, wodurch die Haftmittel (C) gezielt gehärtet werden, wobei das Verfahren beinhaltet:
einen Schleuderschritt zum Drehen der zwei Scheibensubstrate (A, B), die durch das lichthärtende Haftmittel übereinander angeordnet sind, und einen Schritt zum Bestrahlen des Haftmittels (C) in mehreren zuvor festgelegten Bereichen mit einem das Haftmittel härtenden Licht durch eines der Scheibensubstrate (A), um das Haftmittel (C) gezielt in jedem Bereich zu härten, wobei Schleuderzeitdauern der Schleuderschritte für das Scheibensubstrat (A, B) unterschiedlich voneinander eingestellt werden und der Schleuderschritt vor dem Lichtbestrahlungsschritt zum Bestrahlen des Haftmittels mit dem das Haftmittel härtenden Licht in jedem Bereich der Scheibensubstrate (A, B) durchgeführt wird.

2. Verfahren zum Herstellen der optischen Scheibe nach Anspruch 1, bei dem das Haftmittel (C) in jedem der konzentrisch geteilten Bereiche des Scheibensubstrats unter Verwendung eines Blendenmechanismus (23) mit Licht bestrahlt wird, der das das Haftmittel härtende Licht abschirmt.

3. Verfahren zum Herstellen der optischen Scheibe nach Anspruch 1 oder 2, bei dem der Lichtbestrahlungsschritt zunächst mit Bezug auf das Haftmittel (C) durchgeführt wird, das in einen der am weitesten innen angeordneten Umfangsbereiche von den mehreren konzentrisch geteilten Bereichen des Scheibensubstrats (A, B) eingefüllt ist.

4. Verfahren zum Herstellen der optischen Scheibe nach einem der Ansprüche 1 bis 3, bei dem der Lichtbestrahlungsschritt mit Bezug auf die Haftmittel (C) aufeinanderfolgend von dem am weitesten innen angeordneten Umfangsbereich zu äußeren Umfangsbereichen von den mehreren konzentrisch geteilten Bereichen des Scheibensubstrats (A, B) durchgeführt wird.

5. Verfahren zum Herstellen der optischen Scheibe nach einem der Ansprüche 1 bis 4, bei dem Intensitäten des Lichts, mit dem die Haftmittel (C) in jedem der mehreren konzentrisch geteilten Bereiche des Scheibensubstrats (A, B) zu bestrahlen sind, unterschiedlich voneinander eingestellt werden.

6. Verfahren zum Herstellen der optischen Scheibe nach einem der Ansprüche 1 bis 5, bei dem Bestrahlungszeitdauern des Lichts, mit dem die Haftmittel (C) in jedem der mehreren konzentrisch geteilten Bereiche des Scheibensubstrats zu bestrahlen sind, unterschiedlich voneinander eingestellt werden.

7. Verfahren zum Herstellen der optischen Scheibe nach einem der Ansprüche 1 bis 6, bei dem ein ultravioletthärtendes Harz, das beim Empfang von UV-Strahlen gehärtet wird, als das Haftmittel (C) verwendet wird.

8. Verfahren zum Herstellen der optischen Scheibe nach Anspruch 1, bei dem Drehgeschwindigkeiten des Scheibensubstrats (A, B) in den Schleuderschritten unterschiedlich voneinander eingestellt werden.

9. Vorrichtung zum Herstellen einer optischen Informations-Aufzeichnungs- oder Wiedergabe-Scheibe zum Ausbilden einer Zwischenschicht, indem Drehzentren von zwei in der Form einer Scheibe ausgebildeten Scheibensubstraten (A, B) zur Deckung gebracht werden und ein zwischen den Scheibensubstraten (A, B) eingefülltes, lichthärtendes Haftmittel (C) gehärtet wird, wobei die Vorrichtung umfasst:
ein Substrathaltemittel (11) zum Halten der zwei Scheibensubstrate (A, B), die durch das lichthärtende Haftmittel (C) übereinander angeordnet sind, so dass sich die Scheibensubstrate (A, B) drehen können,
ein Lichtbestrahlungsmittel (21) zum gezielten Bestrahlen des Haftmittels (C), das vorbestimmten Bereichen des Scheibensubstrats (A, B) entspricht, mit dem das Haftmittel härtenden Licht, und
ein Steuermittel zum Ausgeben eines Befehls, der es dem Substrathaltemittel (11) ermöglicht, einen Schleudervorgang durchzuführen, und eines Befehls, der es dem Lichtbestrahlungsmittel (21) ermöglicht, das Haftmittel (C), das jedem der Bereiche des Scheibensubstrats (A, B) entspricht, gezielt mit dem das Haftmittel härtenden Licht zu bestrahlen, **dadurch gekennzeichnet, dass** das Scheibensubstrat (A, B) konzentrisch in Bereiche geteilt ist und jedes Haftmittel (C) in jedem der Bereiche mit Licht bestrahlt wird, wodurch die Haftmittel (C) gezielt gehärtet werden, Schleuderzeitdauern der Schleuderschritte für das Scheibensubstrat (A, B) unterschiedlich voneinander eingestellt sind und die Durchführung des Schleudervorgangs durch das Substrathaltemittel (11) vor dem Bestrahlen des Haftmittels (C) mit dem das Haftmittel härtenden Licht in jedem der Bereiche des Scheibensubstrats (A, B) durchgeführt wird.

10. Vorrichtung zum Herstellen der optischen Scheibe nach Anspruch 9, bei der das Lichtbestrahlungsmittel (21) eine Lichtquelle (22) zum Emittieren des das Haftmittel härtenden Lichts und einen Blendenmechanismus (23) beinhaltet, der zwischen der Lichtquelle (22) und dem Scheibensubstrat (A, B) angeordnet ist, wobei der Blendenmechanismus (23) von der Lichtquelle (22) zu dem Haftmittel (C) emittiertes Licht durch einen Befehl von dem Steuermittel gezielt abschirmt.

11. Vorrichtung zum Herstellen der optischen Scheibe nach Anspruch 9, bei der das Lichtbestrahlungsmittel (21) eine große Anzahl von Lichtquellen (22), die das das Haftmittel härtende Licht emittieren, beinhaltet, wobei jede der Lichtquellen (22) gezielt durch einen Befehl von dem Steuermittel zum Leuchten gebracht wird, so dass das Haftmittel (C), das einem vorbestimmten Bereich des Scheibensubstrats (A, B) entspricht, gezielt mit dem Licht bestrahlt wird.

12. Vorrichtung zum Herstellen der optischen Scheibe nach Anspruch 11, bei der die große Anzahl von Lichtquellen (22), die das Lichtbestrahlungsmittel (21) bilden, UV-Leuchtdioden sind.

## Revendications

1. Procédé de fabrication d'un disque optique d'enregistrement et/ou de reproduction d'informations pour former une couche intermédiaire en alignant des centres de rotation de deux substrats de disque (A, B) formés en forme d'un disque, et en faisant durcir un adhésif de type pouvant durcir à de la lumière (C) chargé entre les substrats de disque (A, B), **caractérisé en ce que** le substrat de disque (A, B) est divisé concentriquement en régions, et chacun de l'adhésif (C) dans chacune des régions est irradié par de la lumière, faisant de ce fait durcir sélectivement les adhésifs (C), ledit procédé incluant
une étape de mise en rotation pour faire tourner les deux substrats de disque (A, B) qui sont superposés l'un sur l'autre par l'intermédiaire de l'adhésif de type pouvant durcir à de la lumière, et une étape pour irradier l'adhésif (C) dans une pluralité de régions fixées préalablement à travers un des substrats de disque (A) avec de la lumière de durcissement d'adhésif pour faire durcir sélectivement l'adhésif (C) dans chaque région, **en ce que** ces périodes de temps de mise en rotation du substrat de disque (A, B) des étapes de mise en rotation sont fixées différentes les unes des autres, et **en ce que** l'étape de mise en rotation est effectuée avant ladite étape d'irradiation de lumière pour irradier l'adhésif par ladite lumière de durcissement d'adhésif dans chaque région dans lesdits substrats de disque (A, B).

2. Procédé de fabrication du disque optique selon la revendication 1, dans lequel l'adhésif (C) dans chacune des régions divisées concentriquement du substrat de disque est irradié par de la lumière en utilisant un mécanisme à obturateur (23) qui obture la lumière de type durcissant de l'adhésif.

3. Procédé de fabrication du disque optique selon la revendication 1 ou la revendication 2, dans lequel l'étape d'irradiation de lumière est d'abord effectuée en ce qui concerne l'adhésif (C) chargé dans une de la région périphérique la plus intérieure parmi la pluralité des régions divisées concentriquement du substrat de disque (A, B).

4. Procédé de fabrication du disque optique selon l'une quelconque de la revendication 1 à la revendication 3, dans lequel l'étape d'irradiation de lumière est effectuée en succession en ce qui concerne les adhésifs (C) de la région périphérique la plus intérieure vers des régions périphériques extérieures parmi la pluralité des régions divisées concentriquement du substrat de disque (A, B).

5. Procédé de fabrication du disque optique selon l'une quelconque de la revendication 1 à la revendication 4, dans lequel des éclairages de lumière à irradier sur les adhésifs (C) dans chacune de la pluralité des régions divisées concentriquement du substrat de disque (A, B) sont fixés différents les uns des autres.

6. Procédé de fabrication du disque optique selon l'une quelconque de la revendication 1 à la revendication 5, dans lequel des périodes de temps d'irradiation de lumière devant être irradiée sur les adhésifs (C) dans chacune de la pluralité des régions divisées concentriquement du substrat de disque sont fixées différentes les unes des autres.

7. Procédé de fabrication du disque optique selon l'une quelconque de la revendication 1 à la revendication 6, dans lequel une résine de type à durcissement à des ultraviolets qui est durcie lors de la réception de rayons UV est utilisée en tant qu'adhésif (C).

8. Procédé de fabrication du disque optique selon la revendication 1, dans lequel des vitesses de rotation du substrat de disque (A, B) dans les étapes de mise en rotation sont fixées différentes les unes des autres.

9. Appareil pour fabriquer un disque optique d'enregistrement ou de reproduction d'informations pour former une couche intermédiaire en alignant des centres de rotation de deux substrats de disque (A, B) formés en forme d'un disque, et en faisant durcir un adhésif (C) de type à durcissement à de la lumière chargé entre les substrats de disque (A, B), l'appareil comprenant
un moyen de maintien de substrat (11) pour maintenir les deux substrats de disque (A, B) superposés l'un sur l'autre par l'intermédiaire de l'adhésif (C) de type à durcissement à de la lumière de sorte que les substrats de disque (A, B) peuvent tourner,
un moyen d'irradiation de lumière (21) pour irradier sélectivement l'adhésif (C) correspondant à des régions prédéfinies du substrat de disque (A, B) par la lumière de type durcissant de l'adhésif, et
un moyen de commande pour sortir une commande pour permettre au moyen de maintien de substrat (11) d'exécuter une opération de mise en rotation, et une commande pour permettre au moyen d'irradiation de lumière (21) d'irradier sélectivement l'adhésif (C) correspondant à chacune desdites régions du substrat de disque (A, B) par la lumière de type durcissant de l'adhésif, **caractérisé en ce que** le substrat de disque (A, B) est divisé concentriquement en régions, et chacun de l'adhésif (C) dans chacune des régions est irradié par de la lumière, faisant de ce fait durcir sélectivement les adhésifs (C), **en ce que** des périodes de temps de mise en rotation du substrat de disque (A, B) des étapes de mise en rotation sont fixées différentes les unes des autres, et **en ce que** ladite exécution de l'opération de mise en rotation du moyen de maintien de substrat (11) est menée avant l'irradiation de la lumière de type durcissant de l'adhésif sur l'adhésif (C) dans chacune des régions dans le substrat de disque (A, B).

10. Appareil de fabrication du disque optique selon la revendication 9, dans lequel le moyen d'irradiation de lumière (21) inclut une source de lumière (22) pour émettre la lumière de type durcissant de l'adhésif, et un mécanisme à obturateur (23) disposé entre la source de lumière (22) et le substrat de disque (A, B), le mécanisme à obturateur (23) obture sélectivement de la lumière émise en provenance de la source de lumière (22) vers l'adhésif (C) par une commande du moyen de commande.

11. Appareil de fabrication du disque optique selon la revendication 9, dans lequel le moyen d'irradiation de lumière (21) inclut un grand nombre de sources de lumière (22) émettant la lumière de type durcissant de l'adhésif, chacune des sources de lumière (22) est allumée sélectivement par une commande du moyen de commande de sorte que l'adhésif (C) correspondant à une région prédéfinie du substrat de disque (A, B) est irradié sélectivement par la lumière.

12. Appareil de fabrication du disque optique selon la revendication 11, dans lequel le grand nombre de sources de lumière (22) constituant le moyen d'irradiation de lumière (21) sont des diodes émettant de la lumière UV.
